# FASCICULE DE BREVET EUROPEEN

(11) **EP 1 376 884 B1**
(45) Date de publication et mention de la délivrance du brevet: **02.03.2005**
(21) Numéro de dépôt: 02014220.4
(22) Date de dépôt: 26.06.2002
(51) Int. Cl.: H04B 1/44, H04B 1/48

(54) **Dispositif de commutation radiofréquence, en particulier pour téléphone mobile cellulaire**
Radiofrequenz-Schalter, insbesondere für ein zellulares Mobiltelefon
Radiofrequency switching means, in particular for a cellular mobile phone

(43) Date de publication de la demande: 02.01.2004
(73) Titulaire: STMicroelectronics N.V., 1077 XX Amsterdam (NL)
(72) Inventeur: Conti, Patrick, 74250 St-Jean de Tholome (FR)
(74) Mandataire: Casalonga, Axel

(56) Documents cités:
- FR-A- 2 598 051
- US-A- 5 689 818
- PATENT ABSTRACTS OF JAPAN vol. 005, no. 063 (E-054), 28 avril 1981 (1981-04-28) & JP 56 014732 A (MITSUBISHI ELECTRIC CORP), 13 février 1981 (1981-02-13)

## Description

L'invention concerne les dispositifs de commutation radiofréquences, et plus particulièrement ceux incorporés dans les terminaux de système de communication sans fil, comme par exemple les téléphones mobiles cellulaires, pouvant fonctionner sous différentes normes ou standards de transmission (GSM, DCS, PCS, WCDMA, ...).

Lorsqu'un terminal, tel qu'un téléphone mobile cellulaire, est destiné à fonctionner avec différents standards de transmission, il est alors nécessaire de prévoir un dispositif de commutation d'antenne de façon à pouvoir commuter sélectivement les voies de réception et/ou d'émission dédiées à chacun des standards, vers l'antenne.

Actuellement, les dispositifs classiques de commutation radiofréquences sont réalisés à base de diodes PIN, bien connues de l'homme du métier, c'est-à-dire des diodes formées d'une région P⁺, d'une région N⁺, et d'une région de matériau semiconducteur intrinsèque disposée entre les deux régions précitées, ainsi qu'à base d'un diplexeur et de lignes de transmissions quart d'onde.

De tels dispositifs présentent des inconvénients d'encombrement, en raison notamment du nombre élevé d'inductances de très haute qualité (sept pour un dispositif de commutation à cinq pôles) et de condensateurs. Et, bien entendu, ceci augmente de façon non négligeable le coût du produit final.

L'invention vise à apporter une solution à ce problème. Un dispositif de commutation radiofréquence ne comportant pas d'inductances quart d'onde est connu du document FR-A-2 598 051.

Un but de l'invention est de réaliser un dispositif de commutation radiofréquence particulièrement simple et économique, tant sur le plan encombrement que sur le plan coût de fabrication.

L'invention a également pour but de proposer un dispositif de commutation qui présente une très bonne isolation radiofréquence lorsque l'une des voies radiofréquences est sélectionnée, de façon à minimiser au maximum la perte d'énergie dans la voix sélectionnée.

L'invention propose donc un dispositif de commutation radiofréquence comportant au moins une première voie radiofréquence et une deuxième voie radiofréquence connectées ensemble à une borne d'entrée/sortie, comportant par exemple une antenne radiofréquence, et des moyens de commutation commandables aptes à sélectionner l'une des voies radiofréquences en réponse à un signal de commande de commutation.

Selon une caractéristique générale de l'invention, les moyens de commutation comportent un module de commande sur chaque voie radiofréquence. Chaque module de commande comporte une diode PIN dont la cathode est connectée à la borne d'entrée/sortie, et un transistor de commande dont la base est reliée à une entrée de commande destinée à recevoir le signal de commande de commutation. Par ailleurs, le collecteur de ce transistor de commande est relié à l'anode de la diode PIN et ce collecteur est vu comme formant le noeud commun entre des anodes de jonctions PN.

Selon un mode de réalisation préférentiel, le transistor de commande est un transistor PNP latéral.

En pratique, le dispositif de commutation de fréquence selon l'invention peut comporter plus de deux voies radiofréquences connectées ensemble à la borne d'entrée/sortie. Ainsi, il peut comporter par exemple cinq voies radiofréquences conduisant alors à un dispositif à cinq pôles beaucoup plus compact et moins coûteux qu'un dispositif à cinq pôles de l'art antérieur.

Le dispositif est avantageusement réalisé sous la forme d'un circuit intégré.

Dans une application de communication sans fil, la borne d'entrée/sortie peut comporter une antenne radiofréquence et les voies radiofréquences comportent des voies dédiées à l'émission et des voies dédiées à la réception.

De façon à pouvoir s'adapter à des transmissions multistandards, le dispositif comporte avantageusement les voies respectivement dédiées à des normes de transmission différentes ayant des fréquences différentes, par exemple des voies dédiées à l'émission/réception GSM, des voies dédiées à l'émission/réception DCS/PCS, et/ou des voies dédiées à l'émission/réception WCDMA.

L'invention a également pour objet un terminal distant d'un système de communication sans fil, par exemple un téléphone mobile cellulaire, comportant un dispositif de commutation radiofréquence tel que défini ci-avant.

D'autres avantages et caractéristiques de l'invention apparaîtront à l'examen de la description détaillée de modes de réalisation, nullement limitatifs, et des dessins annexés, sur lesquels :
- la figure 1 illustre schématiquement un mode de réalisation d'un dispositif de commutation radiofréquence selon l'invention ;
- la figure 2 illustre schématiquement une représentation d'un transistor de commande d'un dispositif selon l'invention ;
- la figure 3 illustre schématiquement le circuit équivalent du transistor de la figure 2 ;
- la figure 4 illustre schématiquement et plus en détail une partie d'un module de commande d'un dispositif selon l'invention ; et
- la figure 5 est une autre représentation schématique et partielle d'une partie d'un module de commande d'un dispositif selon l'invention.

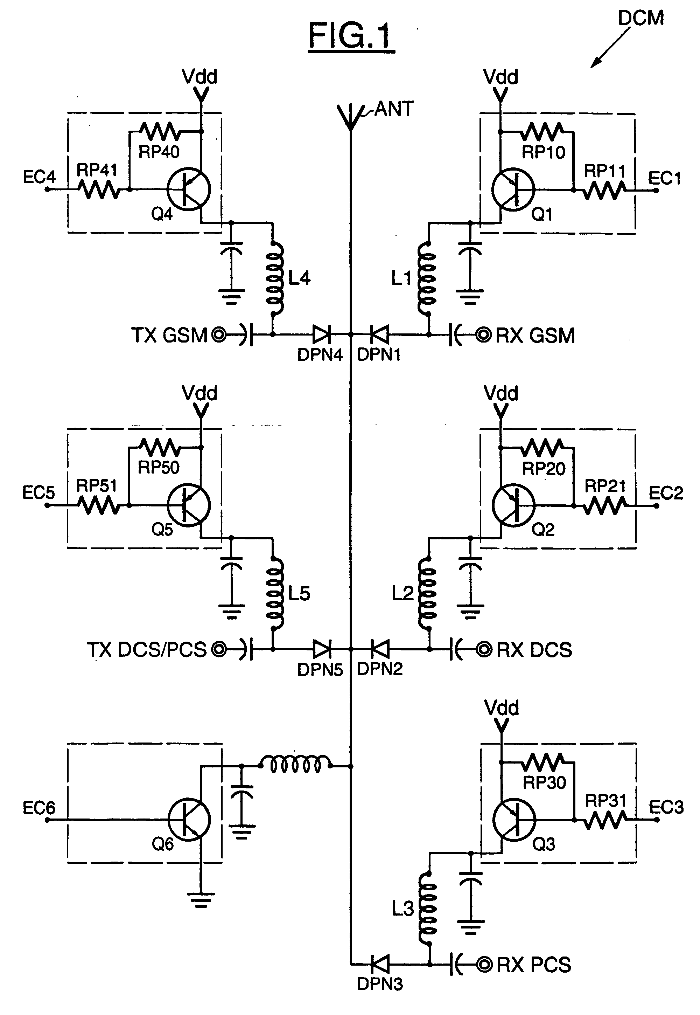

Sur la figure 1, la référence DCM désigne un dispositif de commutation radiofréquence incorporé par exemple dans l'étage radiofréquence d'un téléphone mobile cellulaire capable de fonctionner selon la norme GSM, ou bien selon la norme DCS, ou PCS.

Ce dispositif de commutation DCM comporte une antenne ANT ainsi que cinq voies radiofréquences, respectivement référencées
- TXGSM pour la voie d'émission selon la norme GSM,
- RXGSM pour la voie de réception selon la norme GSM,
- TXDCS/PCS pour la voie d'émission selon la norme DCS ou PCS,
- RXDCS pour la voie de réception selon la norme DCS, et
- RXPCS pour la voie de réception selon la norme PCS.

Sur la figure 1, on a représenté schématiquement ces voies radiofréquences par un double rond, référencé par exemple pour la voie RXGSM par la lettre S1.

Chacune de ces voies comporte, de façon classique, notamment des étages de transposition de fréquence, des amplificateurs faible bruit et à gain commandé, ainsi que des étages de conversion analogique/numérique et numérique/analogique reliés à l'étage de traitement numérique du téléphone, comportant notamment un processeur capable d'effectuer les traitements en bande de base, tels que des traitements de décodage de canal, de codage de canal, de décodage de source et de codage de source.

Le dispositif DCM comporte par ailleurs des moyens de commutation commandables par le processeur du téléphone portable, de façon à sélectionner l'une de ces voies radiofréquences en réponse à un signal de commande de commutation.

Ces moyens de commutation commandables comportent ici un module de commande sur chaque voie radiofréquence.

Plus précisément, chaque module de commande, par exemple le module connecté sur la voie radiofréquence RXGSM, comporte une diode PIN référencée DPN1, dont la cathode est reliée à l'antenne ANT. L'anode de cette diode DPN1 est reliée par ailleurs à la borne S1 de la voie radiofréquence par l'intermédiaire d'un condensateur.

Une diode PIN est une diode bien connue de l'homme du métier et est formée d'une région P⁺, d'une région N⁺ encadrant une région de matériau semiconducteur intrinsèque. Lorsqu'une telle diode est polarisée en direct, des porteurs de charges apparaissent dans la région intrinsèque qui devient alors conductrice. Par contre, lorsque la diode est polarisée en inverse, ces porteurs de charges disparaissent de la région intrinsèque qui devient résistive. A basse fréquence, une diode PIN se comporte comme une diode classique. Par contre, à haute fréquence, la diode PIN se comporte comme une résistance variable dépendant du courant de polarisation. La fréquence de seuil d'une diode PIN est choisie ici de façon à être bien inférieure aux fréquences utilisées dans les différentes normes de transmission.

Outre cette diode DPN1, le module de commande qui est sur la voie RXGSM comporte un transistor de commande Q1, qui est ici un transistor latéral du type PNP.

Le collecteur du transistor Q1 est relié à l'anode de la diode DPN1 par l'intermédiaire d'une inductance de choc L1 dont le rôle est de laisser passer le courant continu et de s'opposer au courant haute fréquence. Le collecteur du transistor Q1 est par ailleurs relié à la masse par l'intermédiaire d'un autre condensateur.

L'émetteur du transistor Q1 est relié à la tension d'alimentation Vdd et sa base est reliée à une entrée de commande EC1 destinée à recevoir le signal logique de commande de commutation.

Enfin, deux résistances de polarisation RP10 et RP11 assurent la polarisation du transistor Q1.

Les autres modules de commande, respectivement connectés sur les autres voies radiofréquences, sont identiques à celui qui vient d'être décrit.

Outre les modules de commutation, le dispositif DCM comporte également un transistor NPN référencé Q6 dont le collecteur est relié à l'antenne et dont l'émetteur est relié à la masse. La base de ce transistor Q6 est reliée à une autre entrée de commande EC6 destinée à recevoir un signal de commutation émission/réception.

Le transistor Q6 fonctionne en source de courant de façon à limiter le courant à environ 300 microampère, par exemple, dans le mode de réception et à environ 4 mA dans le mode d'émission.

Le signal de commutation émission/réception est donc un signal capable de prendre deux valeurs, de façon à conférer en mode d'émission un courant plus élevé qu'en mode de réception. Les valeurs indicatives de courant qui viennent d'être fournies sont telles qu'elles permettent en mode de réception de ne pas pénaliser la consommation de puissance du récepteur tout en maintenant une résistance des diodes PIN suffisamment faible pour des signaux RF de petite amplitude.

Lorsqu'on veut par exemple sélectionner la voie radiofréquence TXGSM, c'est-à-dire la voie d'émission dédiée à la norme GSM, le processeur du téléphone applique comme signal de commande de commutation, la valeur logique 0 sur l'entrée de commande EC4 et les valeurs logiques 1 sur les entrées de commande EC1, EC2, EC3 et EC5.

De ce fait, le transistor Q4 est passant et le courant continu circule depuis l'alimentation Vdd via le transistor Q4, l'inductance L4, la diode DPN4 et le transistor Q6 vers la masse.

La diode DPN4 est dans un état de faible résistance, tandis que toutes les autres diodes PIN sont dans leur état de haute résistance fournissant alors l'isolation des autres voies radiofréquences.

Par ailleurs, dans cette configuration, le signal de commutation délivré sur l'entrée EC6 est dans son état logique bas de façon à permettre la conduction d'un courant élevé, par exemple 4 mA.

Il est particulièrement important d'obtenir une bonne isolation des voies non sélectionnées. En effet, lorsqu'un mode d'émission est par exemple sélectionné, toutes les autres voies sont en parallèle dans leur mode de haute isolation. Et, une détérioration de cette isolation va directement avoir une conséquence sur la perte d'énergie au niveau de la voie sélectionnée.

Ainsi, à titre d'exemple, lorsque la voie d'émission GSM est sélectionnée, la tension crête/crête au niveau du connecteur d'antenne est de ± 15 volts pour une puissance GSM de l'ordre de 36 dBm. Et, puisque les cathodes des diodes PIN des voies non sélectionnées voient ce signal, des fuites de courant peuvent se produire à travers ces diodes PIN, en l'espèce les diodes DPN1, DPN2, DPN3 et DPN5, si les transistors de commande correspondants présentent une diode équivalente polarisée dans la même direction. Ce serait le cas pour des transistors de commande de type NPN, ou bien, éventuellement pour des transistors de commande du type PNP présentant des diodes de protection contre les décharges électrostatiques (protection ESD) à l'intérieur du circuit intégré.

Dans ce cas, l'isolation serait alors très faible avec comme conséquence une perte d'environ 6 dB dans la voie d'émission sélectionnée, ce qui est inacceptable.

Une solution consisterait alors à appliquer une tension négative égale au pic de tension (-15 volts), sur l'anode de chacune des diodes PIN des voies non sélectionnées, de façon à polariser en inverse ces diodes. Cependant, une telle solution n'est pas possible dans un téléphone mobile, dans lequel la tension d'alimentation Vdd est faible, typiquement égale à 2,7 volts.

L'invention résout ce problème en combinant à la diode PIN un transistor de commande dont le collecteur est relié à l'anode de cette diode PIN, ce collecteur étant vu comme formant le noeud commun entre des anodes de jonctions PN.

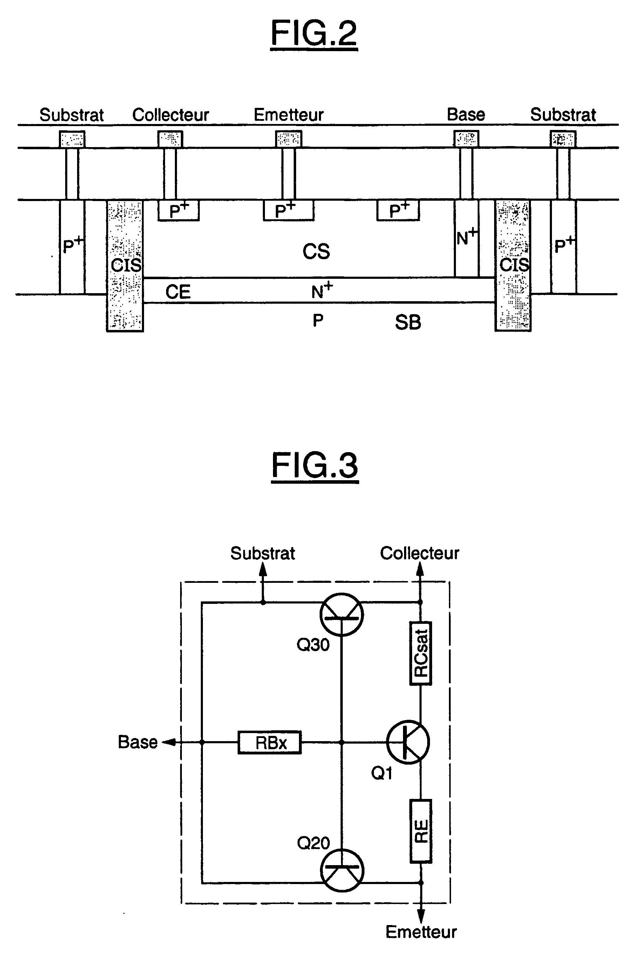

Une solution pour réaliser un tel transistor consiste à utiliser un transistor PNP latéral dont la figure 2 en rappelle la structure.

Ce transistor est ici réalisé dans un caisson CS dopé N séparé du substrat SB dopé P par une couche enterrée CE dopée N⁺. Cette couche CE est reliée au contact de base par l'intermédiaire d'un puits N⁺.

Le caisson CS, formant la zone active du transistor, est isolé du reste du substrat SB par des caissons d'isolement latéral CIS. Des puits P⁺ permettent la polarisation du substrat.

Enfin, les régions de collecteur et d'émetteur du transistor, dopées P⁺, et reliées aux contacts correspondants, sont ménagées également par implantation dans le caisson CS.

Electriquement, le schéma équivalent de ce transistor latéral Qlest illustré sur la figure 3. Sur cette figure, le transistor Q1 désigne le transistor latéral, tandis que les transistors Q20 et Q30 représentent des transistors parasites, de type PNP.

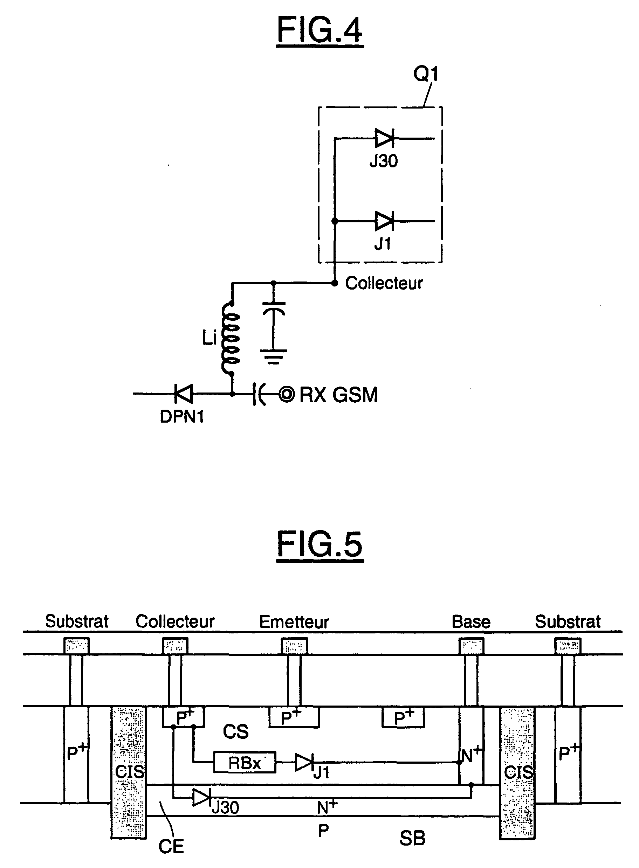

On voit donc, en se référant plus particulièrement à la figure 4, que, dans ce cas, le collecteur du transistor Q1 est vu comme formant le noeud commun entre l'anode de la jonction PN (diode) J1 collecteur/base du transistor Q1, et de la jonction PN J30 issue du transistor parasite Q30. Ces différentes jonctions sont également représentées sur la figure 5.

De ce fait, puisque l'anode de la diode PIN, référencée DPN1, et les anodes des diodes équivalentes du transistor Q1, à savoir les anodes des diodes J1 et J30, sont connectées ensemble, il n'y a aucun courant susceptible de traverser la diode DPN1, quelle que soit la tension appliquée à la cathode de la diode DPN1 lorsque le transistor de commande Q1 est bloqué.

La diode DPN1 reste donc dans son état de polarisation inverse, maintenant une forte valeur résistive. Il a alors été montré que l'isolation n'est pas affectée, même à haute puissance. Par voie de conséquence, les pertes d'énergie dans la voie active sélectionnée restent inférieures à 0,5 dB, ce qui est tout à fait acceptable.

Bien entendu, le raisonnement qui vient d'être effectué ici pour la diode DPN1 et le transistor Q1 s'applique pour les diodes PIN des voies non sélectionnées et pour les transistors de commande correspondants.

La combinaison de diodes PIN ayant leurs cathodes connectées ensemble, et commandées en série par des transistors latéraux PNP, permet de ne pas utiliser de diplexeur ni de lignes de transmission quart d'onde. Ceci permet une économie substantielle de composants passifs puisqu'un dispositif de commutation radiofréquence cinq pôles, tel que celui illustré sur la figure 1, permet d'économiser sept inductances haute qualité et quinze condensateurs.

Par ailleurs, le dispositif selon l'invention permet de s'affranchir de l'utilisation d'une tension d'alimentation négative élevée pour maintenir un bon niveau de performance.

Enfin, l'utilisation de diodes PIN à cathodes communes permet leur intégration sur le même circuit intégré, réduisant ainsi la taille de ce dernier.

## Revendications

1. Dispositif de commutation radiofréquence, comportant au moins une première voie radiofréquence et une deuxième voie radiofréquence connectées ensemble à une borne d'entrée/sortie, et des moyens de commutation commandables aptes à sélectionner l'une des voies radiofréquences en réponse à un signal de commande de commutation, **caractérisé par le fait que** les moyens de commutation comportent un module de commande connecté sur chaque voie radiofréquence, chaque module de commande comportant une diode PIN (DPNi) dont la cathode est connectée à la borne d'entrée/sortie (ANT), et un transistor de commande (Qi) dont la base est reliée à une entrée de commande (Eci) destinée à recevoir le signal de commande de commutation, et dont le collecteur est relié à l'anode de la diode PIN, et **par le fait que** le collecteur du transistor de commande (Qi) est vu comme formant le noeud commun entre des anodes de jonctions PN.

2. Dispositif selon la revendication 1, **caractérisé par le fait que** le transistor de commande (Qi) est un transistor PNP latéral.

3. Dispositif selon la revendication 1 ou 2, **caractérisé par le fait qu'**il comporte plus de deux voies radiofréquences connectées ensemble à la borne d'entrée/sortie (ANT).

4. Dispositif selon l'une des revendications précédentes, **caractérisé par le fait qu'**il est réalisé sous la forme d'un circuit intégré.

5. Dispositif selon l'une des revendications précédentes, **caractérisé par le fait que** la borne d'entrée/sortie comporte une antenne radiofréquence (ANT), et **par le fait que** les voies radifréquence comportent des voies dédiées à l'émission et des voies dédiées à la réception.

6. Dispositif selon la revendication 5, **caractérisé par le fait qu'**il comporte des voies respectivement dédiées à des normes de transmission différentes ayant des fréquences différentes.

7. Terminal distant d'un système de communication sans fil, **caractérisé par le fait qu'**il comporte un dispositif selon l'une des revendications 1 à 6.

8. Terminal distant selon la revendication 7, **caractérisé par le fait qu'**il forme un téléphone mobile cellulaire.

## Claims

1. Radio-frequency switching device, comprising at least a first radio-frequency channel and a second radio-frequency channel connected together at an input/output terminal, and controllable switching means that can select one of the radio-frequency channels in response to a switching control signal, **characterised by** the fact that the switching means comprise a control module connected to each radio-frequency channel, each control module comprising a PIN diode (DPNi) whose cathode is connected to the input/output terminal (ANT), and a control transistor (Qi) whose base is connected to an input control (Eci) designed to receive the switching control signal, and whose sink is connected to the anode of the PIN diode, and by the fact that the control transistor sink (Qi) is seen as forming the common node between the PN anode intersections.

2. Device of claim 1, **characterised by** the fact that the control transistor (Qi) is a lateral PNP transistor.

3. Device of claim 1 or 2, **characterised by** the fact that it comprises more than two radio-frequency channels connected together to the input/output terminal (ANT).

4. Device of any of the previous claims, **characterised by** the fact that it is made in the form of an integrated circuit.

5. Device of any of the previous claims, **characterised by** the fact that the input/output terminal comprises a radio-frequency antenna (ANT) and by the fact that the radio-frequency channels have channels dedicated to transmission and channels dedicated to reception.

6. Device of claim 5, **characterised by** the fact that it has channels respectively dedicated to the different transmission standards which have different frequencies.

7. Terminal that is remote from a cordless communication system, **characterised by** the fact that it comprises a device according to any of claims 1 to 6.

8. Remote terminal according to claim 7, **characterised by** the fact that it is a mobile cellular telephone.

## Patentansprüche

1. Radiofrequenz-Schalter mit mindestens einem ersten Radiofrequenzkanal und einem zweiten Radiofrequenzkanal, die gemeinsam mit einem Eingangs/Ausgangsanschluß verbunden sind, und steuerbaren Schaltereinrichtungen, die als Antwort auf ein Schaltersteuersignal einen der Radiofrequenzkanäle auswählen können, **dadurch gekennzeichnet, daß** die Schaltereinrichtungen ein Steuermodul aufweisen, das mit jedem Radiofrequenzkanal verbunden ist, wobei jedes Steuermodul eine PIN-Diode (DPNi), deren Kathode mit dem Eingangs/Ausgangsanschluß (ANT) verbunden ist, und einen Steuertransistor (Qi) aufweist, dessen Basis mit einem Steuereingang (Eci) zum Empfangen des Schaltersteuersignals verbunden ist, und dessen Kollektor mit der Anode der PIN-Diode verbunden ist, und dadurch, daß der Kollektor des Steuertransistors (Qi) den gemeinsamen Knoten zwischen den Anoden von PN-Übergängen bilden soll.

2. Vorrichtung nach Anspruch 1, **dadurch gekennzeichnet, daß** der Steuertransistor (Qi) ein lateraler PNP-Transistor ist.

3. Vorrichtung nach Anspruch 1 oder 2, **dadurch gekennzeichnet, daß** sie mehr als zwei Radiofrequenzkanäle aufweist, die gemeinsam mit dem Eingangs/Ausgangsanschluß (ANT) verbunden sind.

4. Vorrichtung nach einem der vorstehenden Ansprüche, **dadurch gekennzeichnet, daß** sie in Form einer integrierten Schaltung verwirklicht ist.

5. Vorrichtung nach einem der vorstehenden Ansprüche, **dadurch gekennzeichnet, daß** der Eingangs/Ausgangsanschluß eine Radiofrequenzantenne (ANT) aufweist und dadurch, daß die Radiofrequenzkanäle Sende- und Empfangskanäle aufweisen.

6. Vorrichtung nach Anspruch 5, **dadurch gekennzeichnet, daß** sie Kanäle aufweist, die jeweils unterschiedlichen Übertragungsnormen mit unterschiedlichen Frequenzen zugeordnet sind.

7. Fernendgerät eines drahtlosen Kommunikationssystems, **dadurch gekennzeichnet, daß** es eine Vorrichtung nach einem der Ansprüche 1 bis 6 aufweist.

8. Fernendgerät nach Anspruch 7, **dadurch gekennzeichnet, daß** es ein zellulares Mobiltelefon bildet.
